# EUROPEAN PATENT SPECIFICATION

(11) **EP 2 824 869 B1**
(45) Date of publication and mention of the grant of the patent: **24.08.2016**
(21) Application number: 14173651.2
(22) Date of filing: 24.06.2014
(51) Int. Cl.: H04L 12/18, G06T 11/60, G06F 3/0488

(54) **Image processing apparatus, and image processing method, and carrier medium**
Bildverarbeitungsvorrichtung, und Bildverarbeitungsverfahren, und Aufzeichnungsmedium
Appareil et procédé de traitement d'image et support d'enregistrement

(30) Priority: 01.07.2013 JP 2013138338
(43) Date of publication of application: 14.01.2015
(73) Proprietor: Ricoh Company, Ltd., Tokyo 143-8555 (JP)
(72) Inventor: Murata, Norihiko, Tokyo, 143-8555 (JP)
(74) Representative: Schwabe - Sandmair - Marx

(56) References cited:
- WO-A1-00/10099
- JP-A- 2004 015 371
- JP-A- 2010 176 394
- US-A1- 2004 002 049
- ABDEL-WAHAB H M ET AL: "Shared workspaces for group collaboration: an experiment using Internet and UNIX interprocess communications", IEEE COMMUNICATIONS MAGAZINE, IEEE SERVICE CENTER, PISCATAWAY, US, vol. 26, no. 11, 1 November 1988 (1988-11-01), pages 10-16, XP011436856, ISSN: 0163-6804, DOI: 10.1109/35.9125

## Description

### BACKGROUND

### Technical Field

The present invention relates to an image processing apparatus that displays information such as a message received from an external apparatus via a network, and an image processing method.

### Background Art

Electronic information board products are available at the market as image processing apparatuses, in which the product includes a flat panel using a liquid crystal method or a plasma method, or a large display having a 40 inch to 80 inch size using a projector, and a touch panel. By connecting the products to a personal computer (PC), a PC screen can be displayed on a large screen, and the products can be used for presentation in meetings or educational organizations. The touch panel function of the image processing apparatus can provide a PC operation function, with which the PC can be operated by touching a screen on the touch panel.

Further, an electronic whiteboard application software is provided with the product, and the software can be executed by a PC connected to the image professing apparatus. This application software provides a screen, which can be used as electronic whiteboard, and provides a handwriting function via the touch panel such as a function for drawing handwriting characters on the screen via the touch panel, and a function for drawing handwriting information on a screen taken from the PC screen that provides this application.

By using the image processing apparatus having the handwriting function, information can be directly written on the screen while displaying information on the screen during a meeting in an office, and the screen written information can be stored as required. With this configuration, participants can review screen contents when the meeting is finished, and can re-use the screen contents.

When the image processing apparatus having the above described function is used for a meeting, the image processing apparatus is preferably operated for information input and information display without interrupting a meeting process. Further, the image processing apparatus may need to receive a sudden absence notice from participants, or an emergency notice from an administrative section, which may affect business so that meeting participants can respond the situation quickly.

Technologies that a plurality of users distanced with each other can write and view messages via a network using an electronic message board are known. For example, one of the technologies such as JP-2010-176394-A discloses an electronic message board for sharing information among a plurality of users distanced with each other, in which a message edited by a portable information terminal is transmitted to a network, and then transmitted to a monitor or display connected to the network via a server to display the message

Technologies to share information among a plurality of the image processing apparatuses have been proposed. For example, image processing apparatuses disposed at a plurality of sites are connected to a network, in which handwriting information written to the image processing apparatuses and PC screen information taken by the image processing apparatuses can be shared among a plurality of the image processing apparatuses. However, handwriting information and PC screen information can be transmitted only from the image processing apparatuses that participate communication via the network. Therefore, a third party not present in a communication field such as a meeting cannot transmit emergency information to meeting participants.

JP-2010-176394-A discloses a technology that a message transmitted from other terminal connected to the network is displayed on a shared display apparatus which can be viewed. This technology is suitable to notify a written message to a greater number of users. However, if this technology is applied to an information assistance for a meeting, information notification may interrupt communication in the meeting and reviewing a meeting process.

Therefore, it is desired to transmit emergency information to meeting participants without interrupting communication in a meeting. Further, it is desired to transmit emergency information to meeting participants without interrupting a meeting process and operation and convenience of the image processing apparatus. Further, it is desired that users can concentrate on communication while paying a suitable attention to a message transmitted from an external apparatus.

JP 2004-015371 A discloses an electronic blackboard comprising a display section, an operating section and a speaker. Before a conference is held, each participant registers oneself by inputting participant information. When a message is to be transmitted to a participant during a conference from the outside of the conference room, the message is inputted to an LAN terminal and transmitted, and then that message is displayed on the display board.

US 2004/002049 A1 discloses a system and process for network-based multi-media learning. The system allows annotations to be added by both a presenter and lecture participants and comprises a question management feature that allows participants to submit questions and receive answers during the lecture or afterwards.

WO 00/10099 A1 discloses a system for providing at least one forum for communication to a plurality of clients including a conference server communicable with the computer network for managing graphical representations of clients in the forum.

ABDEL-WAHAB H M ET AL: "Shared workspaces for group collaboration: an experiment using Internet and UNIX interprocess communications", IEEE COMMUNICATIONS MAGAZINE, IEEE SERVICE CENTER, PISCATAWAY, US, vol. 26, no. 11, 1 November 1988 (1988-11-01), pages 10-16, XP011436856, ISSN: 0163-6804, DOI: 10.1109/35.9125 discloses shared workspaces for group collaboration among UNIX users in which every participant is represented by a user agent process that handles both his tool window and his control window.

### SUMMARY

In one aspect of the present invention, an image processing apparatus for displaying an image on a display unit is devised. The image processing apparatus includes a message receiving unit to receive a message display request from an external apparatus via a network; an operation determination unit to determine whether the image processing apparatus is being operated when the message receiving unit receives the message display request; an image generator to generate a message image based on a message included in the message display request when the operation determination unit determines that the image processing apparatus is not being operated; and a message display unit to display the message image on the display unit.

In another aspect of the present invention, an image processing method for displaying an image on a display unit is devised. The method includes the steps of receiving a message display request from an external apparatus via a network (message receiving step); determining whether an image processing apparatus is being operated in response to receiving the message display request (operation determination step); generating a message image based on a message included in the message display request when the operation determination step determines that the image processing apparatus is not being operated (image generation step); and displaying the message image on the display unit (message display step).

In the above described configurations, when a message display request is received from an external apparatus via a network, an operation status of an image processing apparatus is determined. If it is determined that the image processing apparatus is not being operated, a message image is generated based on a message included in the message display request, and then the message image is displayed, with which users can visually confirm the message displayed when the image processing apparatus is not being operated.

### BRIEF DESCRIPTION OF THE DRAWINGS

A more complete appreciation of the disclosure and many of the attendant advantages and features thereof can be readily obtained and understood from the following detailed description with reference to the accompanying drawings, wherein:
FIG. 1 illustrates an image processing system employing an image processing apparatus according to an example embodiment;
FIG. 2 illustrates an image processing system according to another example embodiment;
FIG. 3 is a hardware configuration and a functional configuration of an image processing apparatus of FIG. 2;
FIG. 4 is an example configuration of an image layer according to an example embodiment.
FIG. 5 illustrates shifting of communication status between a Web client program (user PC) and a Web-service program according to an example embodiment;
FIG. 6 illustrates a message display when a request shown in FIG. 5 is received;
FIG. 7 is a flow chart showing the steps of message display when a request shown in FIG. 5 is received;
FIG. 8 is a flow chart showing the steps of operation of an application image generation unit; and
FIG. 9 is a schematic view of configuration of a message queue.

The accompanying drawings are intended to depict exemplary embodiments of the present invention and should not be interpreted to limit the scope thereof. The accompanying drawings are not to be considered as drawn to scale unless explicitly noted, and identical or similar reference numerals designate identical or similar components throughout the several views.

### DETAILED DESCRIPTION

A description is now given of exemplary embodiments of the present invention. It should be noted that although such terms as first, second, etc. may be used herein to describe various elements, components, regions, layers and/or sections, it should be understood that such elements, components, regions, layers and/or sections are not limited thereby because such terms are relative, that is, used only to distinguish one element, component, region, layer or section from another region, layer or section. Thus, for example, a first element, component, region, layer or section discussed below could be termed a second element, component, region, layer or section without departing from the teachings of the present invention.

In addition, it should be noted that the terminology used herein is for the purpose of describing particular embodiments only and is not intended to be limiting of the present invention. Thus, for example, as used herein, the singular forms "a", "an" and "the" are intended to include the plural forms as well, unless the context clearly indicates otherwise. Moreover, the terms "includes" and/or "including", when used in this specification, specify the presence of stated features, integers, steps, operations, elements, and/or components, but do not preclude the presence or addition of one or more other features, integers, steps, operations, elements, components, and/or groups thereof.

Furthermore, although in describing views shown in the drawings, specific terminology is employed for the sake of clarity, the present disclosure is not limited to the specific terminology so selected and it is to be understood that each specific element includes all technical equivalents that have a similar function, operate in a similar manner, and achieve a similar result. Referring now to the drawings, an apparatus or system according to an example embodiment is described hereinafter.

In the below described example embodiment of the present invention, an image processing apparatus can conducts information display processing as follows. The image processing apparatus can receive a message display request from an external apparatus, and determines whether the image processing apparatus is being operating by a user before displaying a message. If it is determined that the image processing apparatus is being operated, the message is not displayed on a screen, and a display of the message is suspended until it is determined that the image processing apparatus is not being operated. The message can be displayed on a screen at a timing when it is determined that the image processing apparatus is not being operated. Further, when a given time elapses after starting the display of message, the message can be deleted or erased from the screen.

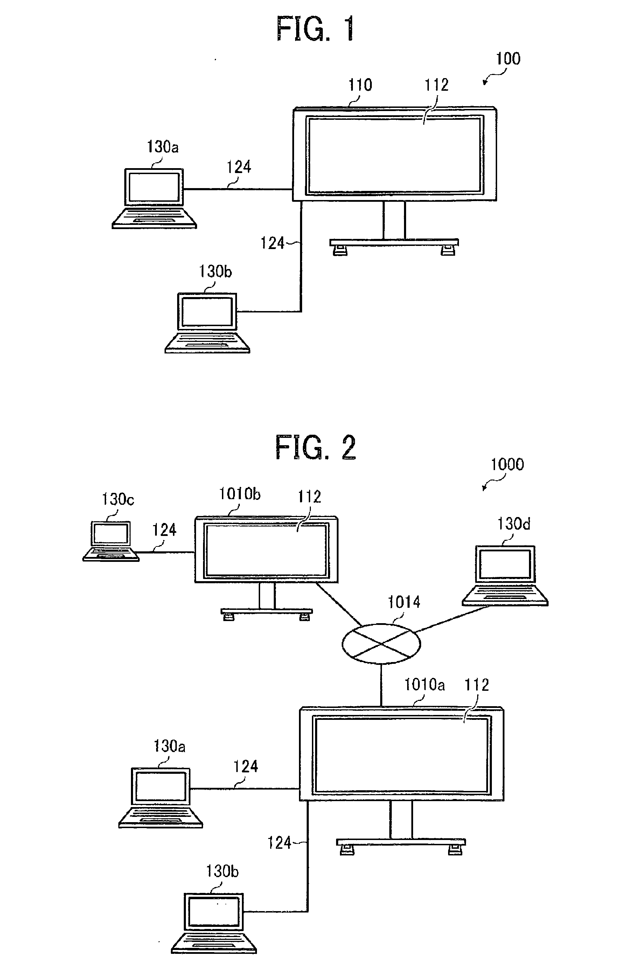

A description is given of an image processing apparatus according to an example embodiment of the present invention with reference to drawings. FIG. 1 illustrates an image processing system employing an electronic information board as an image processing apparatus according to an example embodiment.

An image processing system 100 includes an image processing apparatus 110, and user personal computers (PCs) 130a and 130b, in which the image processing apparatus 110 and the user PCs 130a and 130b are connectable by a cable 124. The image processing apparatus 110 can display an image displayed on the user PCs 130a and 130b, and can display an image that a user generates on a screen of the image processing apparatus 110. Each of the user PCs 130a and 130b can be used as an information processing apparatus to provide images to be displayed by the image processing apparatus 110. Each of the user PCs 130a and 130b includes an interface that outputs image signals, and provides or transmits image signals used for forming an image on the user PCs 130a and 130b to the image processing apparatus 110 with a given frame rate (e.g., 30 frames per second).

In a case of FIG. 1, each of the user PCs 130a and 130b includes a video graphic array (VGA) output terminal as an interface, and can transmit VGA signals to the image processing apparatus 110 via a cable 124 such as VGA cable. In other cases, the user PCs 130a and 130b can transmit a display image using wireless communication complied to various wireless communication protocols. In a configuration of FIG. 1, each of the user PCs 130a and 130b can employ a notebook PC, but in other configurations, an information processing apparatus such as a desk top PC, a tablet PC, a personal digital assistant (PDA), a digital video camera, and a digital camera that can supply image frame can be employed. Further, in the configuration of FIG. 1, the image processing system 100 employs two user PCs 130a and 130b, but the image processing system 100 can employ one user PC or three or more users PC in other cases.

FIG. 2 illustrates an image processing system such as an electronic board system according to another example embodiment of the present invention. A description is given of an image processing system 1000 with reference to difference to the above image processing system 100 of FIG. 1. The image processing system 1000 can be configured with an image processing apparatus 1010a, an image processing apparatus 1010b, and a user PC 103d connectable via a network 1014. The network 1014 is a network such as a local area network (LAN) and the Internet, and the network 1014 is used to communicate various data among the image processing apparatus 1010a, the image processing apparatus 1010b, and the user PC 103d. The image processing apparatus 1010a is connectable with the user PCs 130a and 130b via the cable 124. The image processing apparatus 1010b is connectable with a user PC 130c via the cable 124. The image processing apparatus 1010a, the image processing apparatus 1010b and the user PC 130d communicate information such as image data and events with each other via the network 1014. In a configuration of FIG. 2, the image processing apparatus 1010a and the image processing apparatus 1010b are connectable via the network 1014. In other configurations, these image processing apparatuses can be directly connectable using a star connection configuration without using the network 1014.

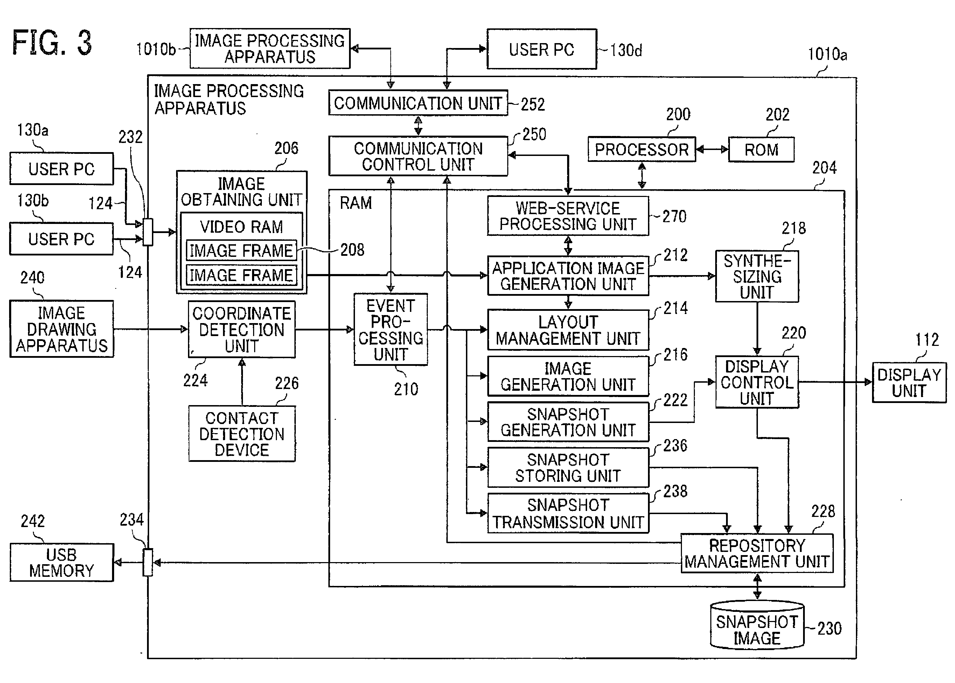

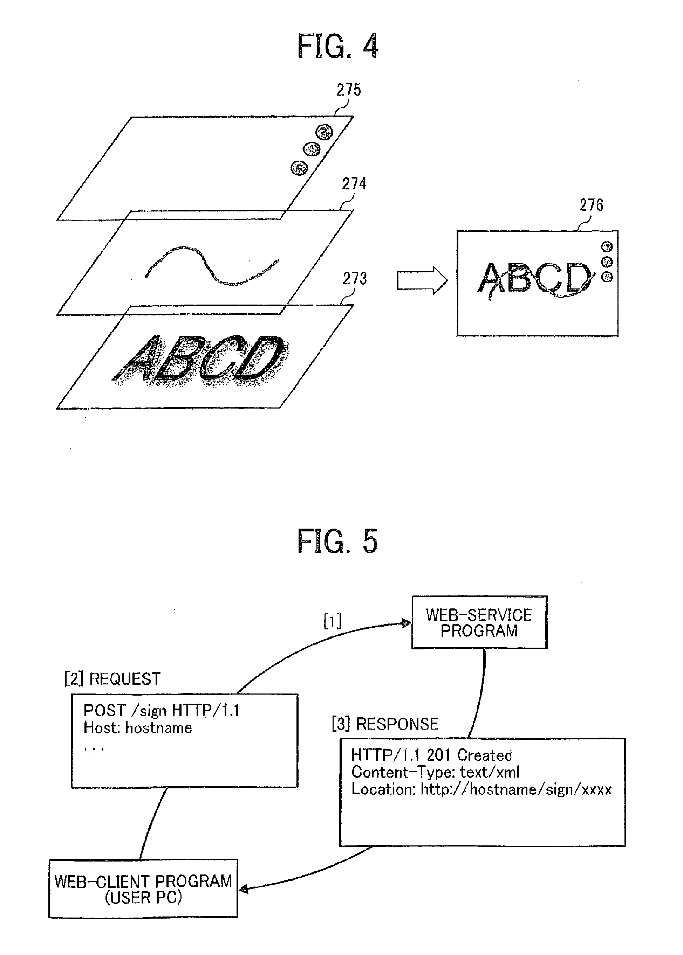

FIG. 3 is a hardware configuration and a functional configuration of the image processing apparatus 1010 shown in FIG. 2. FIG. 4 is an example configuration of an image layer according to an example embodiment. A description is given of a hardware configuration and a functional configuration of the image processing apparatus 1010 (i.e., image processing apparatus 1010a, 1010b) with reference to FIG. 3.

The image processing apparatus 1010 includes an image input interface 232, and the image processing apparatus 1010 is connectable to the users PC 130a and 130b via the image input interface 232. The image input interface 232 is an interface that receives image signals used to form display images of the user PCs 130a and 130b. The image input interface 232 can employ a digital visual interface (DVI) connector using a DVI terminal. The image input interface 232 receives VGA signals from the user PCs 130a and 130b via the cable 124 such as VGA cable, and supplies the VGA signals to an image obtaining unit 206 in the image processing apparatus 1010.

In other configurations, a video graphics array (VGA) connector, a high-definition multimedia interface (HDMI) connector, and a display port connector can be employed. Further, in other configurations, the image input interface 232 can receive image signals from the user PCs 130a and 130b using wireless communication complied to wireless communication protocols such as Bluetooth (registered trademark) and WiFi (registered trademark).

The image processing apparatus 1010 includes, for example, a processor 200, a read only memory (ROM) 202, a random access memory (RAM) 204, an image obtaining unit 206, a coordinate detection unit 224, a contact detection device 226, and a display unit 112.

The processor 200 is a computing unit such as a central processing unit (CPU) and a micro processing unit (MPU) that activates operating system (OS), WINDOWS (registered trademark) series, UNIX (registered trademark), LINUX (registered trademark), TRON, ITRON, and µITRON. Under the control of these OS, computer-readable programs, described by object-oriented programming languages such as C++, Java (registered trademark), JavaScript (registered trademark), Perl, Ruby, PYTHON or legacy programming languages such as machine language, assembler language to control functional units used for the apparatus or system, can be executed. The ROM 202 is a non-volatile memory that stores boot programs such as BIOS and EFI.

The RAM 204 is a main memory such as a dynamic random access memory (DRAM) and a static random access memory (SRAM), and provides a working area for executing a program according to an example embodiment. The processor 200 reads a program according to an example embodiment from a hard disk that retains software programs and various data, and executes the program according to an example embodiment using the RAM 204. The program includes program modules such as an event processing unit 210, an application image generation unit 212 (application image generator), a layout management unit 214, an image generation unit 216, a synthesizing unit 218, a display control unit 220, a snapshot generation unit 222, a snapshot storing unit 236, a snapshot transmission unit 238, and a repository management unit 228.

The image obtaining unit 206 has a function to obtain image signals from the user PCs 130a and 130b. The image obtaining unit 206 receives image signals from the user PCs 130a and 130b via the image input interface 232. Then, the image obtaining unit 206 analyzes the concerned image signals to obtain image information of display image of the user PCs 130a and 130b formed by the concerned image signals, in which image frame resolution level and the update frequency of the image frame are obtained as image information, and then the image obtaining unit 206 transmit the image information to the application image generation unit 212.

Further, the image obtaining unit 206 generates an image frame for each of a display image of the user PCs 130a and 130b using the concerned image signals, and over-writes image data in a video RAM 208 which can used as a storage or a memory that can store data temporally.

The application image generation unit 212 has a function to generate various display windows to be displayed on the display unit 112. The display windows includes, for example, a display window to display an image frame for a display image of the user PCs 130a and 130b, a display window to display an image generated by a user, a display window to display buttons and a menu used for setting various settings for the image processing apparatus 110, and a display window for a file viewer and a Web browser. The application image generation unit 212 generates or draws these display windows on an image layer where the display window is to be generated or drawn.

The layout management unit 214 has a function to draw a display image transmitted from the user PCs 130a and 130b on a display window generated by the application image generation unit 212. Upon obtaining an image information from the image obtaining unit. 206, the layout management unit 214 obtains the image frame stored in the video RAM 208, changes a size of the image frame to a size suitable for the display window generated by the application image generation unit 212 using the image information, and draws the concerned image frame on an image layer where the concerned image frame is to be drawn.

A contact detection device 226 has a function that can detect a contact of an object such as an image drawing apparatus 240. In an example embodiment, the contact detection device 226 employs, for example, a coordinate input/detection apparatus using an infrared ray blocking method. As to the coordinate input/detection apparatus, a light emitting/receiving device is disposed at each lower corner end of the display unit 112, and a reflection member is disposed along a periphery of the display unit 112. A plurality of infrared rays is radiated from the light emitting/receiving device in parallel to the display unit 112, and reflection light reflected from the reflection member disposed along the periphery of the display unit 112 is received by light emitting/receiving device. The contact detection device 226 reports identification information of infrared ray emitted from the two light emitting/receiving devices and blocked by an object to a coordinate detection unit 224, and the coordinate detection unit 224 identifies a coordinate position corresponding to a contact position of the object. In other configurations, various detectors or detection methods can be employed such as a touch panel using an electrostatic capacity method that identifies a contact position by detecting change of electrostatic capacity, a touch panel using a resistive membrane method that identifies a contact position by detecting voltage change of two-opposing resistive membranes, and a touch panel using an electro-magnetic induction method that identifies a contact position by detecting electro-magnetic induction occurring when an object contacts a display unit.

The coordinate detection unit 224 has a function to compute a coordinate position corresponding to a position where an object contacts the display unit 112, and a function to issue various events. The coordinate detection unit 224 computes a coordinate position corresponding to a contact position of an object using identification information of blocked infrared ray notified by the contact detection device 226. The coordinate detection unit 224 issues the coordinate position corresponding to the contact position and various events to the event processing unit 210. Events issued by the coordinate detection unit 224 include, for example, an event notifying that an object contacts or become close to the display unit 112 (TOUCH), an event notifying that a contact point or a close point moves while an object is being contacted or close to the display unit 112 (MOVE), and an event notifying that an object leaves from the display unit 112 (RELEASE). These events include coordinate position information such as the contact position coordinate and close position coordinate.

The image drawing apparatus 240 is an apparatus that draws an image by contacting to the contact detection device 226 of the image processing apparatus 1010. The image drawing apparatus 240 has a contact detection unit having a pen shape at a front end that can detect a contact to an object. When the contact detection unit contacts the object, the image drawing apparatus 240 transmits a contact signal indicating a contacted condition with identification information of the image drawing apparatus 240 to the coordinate detection unit 224. Further, the image drawing apparatus 240 has a function to erase a drawn image object.

The image drawing apparatus 240 has a mode shift switch at its side or rear-end to shift between an image drawing mode and an image erasing mode. When the contact detection unit contacts an object during the image erasing mode, the image drawing apparatus 240 transmits a signal indicating a contacted condition and a signal of the image erasing mode with identification information of the image drawing apparatus 240 to the coordinate detection unit 224. A user can select objects such as menu and button displayed on the display unit 112 using the image drawing apparatus 240.

For example, when a user contacts the image drawing apparatus 240 to the image processing apparatus 110 while the erasing mode shift switch is pressed, the image drawing apparatus 240 transmits a contact signal and identification information of the image drawing apparatus 240, and a mode type signal indicating the image erasing mode. When a user contacts the image drawing apparatus 240 to the image processing apparatus 110 while the erasing mode shift switch is not pressed, the image drawing apparatus 240 transmits a contact signal and identification information of the image drawing apparatus 240.

When the coordinate detection unit 224 receives identification information of infrared ray from the contact detection device 226, the coordinate detection unit 224 computes a coordinate position corresponding to a contact position of an object. Then, when the coordinate detection unit 224 receives the contact signal from the image drawing apparatus 240, the coordinate detection unit 224 issues various events. In this case, the coordinate detection unit 224 notifies information indicating a mode type (hereinafter, "mode type information") to the event processing unit 210 with the concerned event. In one configuration, various signals can be transmitted using short distance wireless communication such as Bluetooth (registered trademark). In other configurations, various signals can be transmitted by wireless communication using ultrasonic wave or infrared ray.

The event processing unit 210 has a function to process an event issued by the coordinate detection unit 224. Upon receiving the event from the coordinate detection unit 224, the event processing unit 210 identifies whether the event is an image drawing instruction event in an image drawing area, an image erasing instruction event, or a selection operation of functional icons displayed on a display unit, and then conducts each of the functions.

The image drawing instruction event is an event instructing an image drawing to the image processing apparatus 110. The image erasing instruction is an event to erase an object drawn to the image processing apparatus 110. The image drawing instruction event and the image erasing instruction event are issued when the image drawing apparatus 240 contacts the display unit 112. A selection notification event is an event that various objects such as buttons and a menu bar configuring a screen displayed on the display unit 112 are selected. The selection notification event is issued when the image drawing apparatus 240 contacts the display unit 112. The event processing unit 210 issues the selection notification event when coordinate position information included in an event issued by the coordinate detection unit 224 is within the coordinate area of the object.

Upon receiving an event from the coordinate detection unit 224, the event processing unit 210 can determine that the image drawing apparatus 240 is being operated by a user (i.e., operated status) caused by an event such as the image drawing instruction event, the image erasing instruction event, and the selection notification event, with which it can determine whether an operated status by a user exists.

Each of the image drawing instruction event and the selection notification event is assigned with identification information. A functional unit of the image processing apparatus 1010, which is operated using these events as a trigger, conducts various processing by referring the concerned identification information. Further, the selection notification event is added with identification information of selected object, and a functional unit of the image processing apparatus 1010, which is operated using the selection notification event as a trigger, conducts various processing by referring the identification information of the concerned object.

The image generation unit 216 has a function to generate an image drawn by a user using the image drawing apparatus 240. The image generation unit 216 generates an image layer by changing color of coordinate position indicated by coordinate position information to a specific color. The image generation unit 216 stores the concerned coordinate position as image drawing information in a storage area for image drawing information in the RAM 204.

The synthesizing unit 218 has a function to synthesize various images. For example, the synthesizing unit 218 synthesizes an image layer for an image drawn by the application image generation unit 212 (hereinafter, "application image layer 275"), an image layer for drawing a display image of the user PCs 130a and 130b drawn by the layout management unit 214 (hereinafter, "captured image layer 273"), and an image layer for an image drawn by the image generation unit 216 (hereinafter, "handwriting layer 274") (FIG. 4).

The display control unit 220 has a function to control the display unit 112. The display control unit 220 displays a synthesized image generated by the synthesizing unit 218 on the display unit 112 such as a monitor and a display.

The synthesizing unit 218 calls the display control unit 220, which can be used as a message display unit, to display the synthesized image on the display unit 112. In other configuration, the synthesizing unit 218 and the display control unit 220 can display synthesized image layer using frequency same as update frequency of image frame included in image information.

The snapshot generation unit 222 has a function to generate a snap shot image, which is a synthesized image of display image of the user PCs 130a and 130b, and a drawn-image generated by the image generation unit 216. The snapshot generation unit 222 receives a selection notification event indicating that a snap-shot button instructing an obtaining of a snap shot image displayed on the display unit 112 is selected. Then, the snapshot generation unit 222 synthesizes the captured image layer 273 and the handwriting layer 274 to generate a snap shot image. Upon generating the snap shot image, the snapshot generation unit 222 instructs the repository management unit 228 to store the snap shot image in the storage unit 230.

The snapshot storing unit 236 has a function to store the snap shot image, stored in the storage unit 230 through the repository management unit 228, to an external storage device such as a universal serial bus (USB) memory 242 via a data output interface 234. The snapshot storing unit 236 receives a selection notification event indicating that a snapshot storing button instructing a storing of snapshot displayed on the display unit 112 is selected. Then, the snapshot storing unit 236 obtains the snap shot image stored in the storage unit 230 through the repository management unit 228, and outputs the snap shot image to the external storage device connected to the data output interface 234.

The snapshot transmission unit 238 has a function to transmit the snap shot image, stored in the storage unit 230 through the repository management unit 228, to a server disposed external of the image processing apparatus via the communication control unit 250. The snapshot transmission unit 238 receives a selection notification event indicating that a snapshot transmit button instructing transmission of the snapshot displayed on the display unit 112 is selected. Then, the snapshot transmission unit 238 obtains the snap shot image stored in the storage unit 230 through the repository management unit 228, and outputs the snap shot image to the communication control unit 250. The communication control unit 250 transmits the snap shot image to a server disposed outside the image processing apparatus via a communication unit 252 using communication protocols such as file transfer protocol (FTP), simple mail transfer protocol (SMTP), or the like.

The repository management unit 228 has a function to control the storage unit 230 that can store the snap shot image. As above described, the repository management unit 228 stores the snap shot image in the storage unit 230 based on an instruction from the snapshot generation unit 222. Further, the repository management unit 228 obtains the snap shot image from the storage unit 230 based on an instruction from the snapshot storing unit 236 or the snapshot transmission unit 238, and transmits the snap shot image to the data output interface 234 or the communication control unit 250. The data output interface 234 is a physical interface for outputting a snap shot image to an external apparatus. For example, the data output interface 234 can employ a USB socket.

The image processing apparatus 1010a includes a communication control unit 250, and a communication unit 252. The communication control unit 250 has a function to control communication between the image processing apparatuses, and between the image processing apparatus and the user PC via the network 1014. The communication unit 252 is used as a network interface with the network 1014. The communication control unit 250 communicates credentials, image data such as image frame and snap shot image, image drawing information, and event information via the communication unit 252.

When the communication control unit 250 receives a message-display request from the user PC, the communication control unit 250 outputs the message-display request to a Web-service processing unit 270, in which the Web-service processing unit 270 can be used as a message receiving unit.

Father, the event processing unit 210 outputs event information such as an image drawing instruction event, an image erasing instruction event, and a selection notification event to the communication control unit 250, and then the event information is output from the communication control unit 250 to the Web-service processing unit 270.

The Web-service processing unit 270 conducts Web-service processing by loading Web-service program to a RAM and activating this program. The Web-service program is a program to process a message-display request based on a request from a Web client program operated on the user PC. When the Web-service program receives the message-display request from the user PC, the Web-service processing unit 270 transmits a message described in the message-display request to the application image generation unit 212. Further, when the Web-service processing unit 270 receives event information from the communication control unit 250, the Web-service processing unit 270 transmits the above described event information to the application image generation unit 212.

FIG. 5 illustrates a communication flow between a Web client program (user PC) and a Web-service program according to an example embodiment, in which hyper text transfer protocol (HTTP) can be used for data communication between the Web client program and the Web-service program. Specifically, the Web client program sets a transmission control protocol (TCP) session to the Web-service program ([1]), and the Web client program transmits a request message ([2]) to the Web-service program. Then, the Web-service program transmits a response message ([3]) to the Web client program. The HTTP POST method can be used for data communication between the Web client program and the Web-service program. Hereinafter, a path and a body parameter set for POST request are described. The path of " /sign " indicates a root path of the Web-service program that displays a message. The body parameter of "message" indicates a message which is to be displayed.

For example, as shown in FIG. 5, it is assumed that the Web client program describes "/sign" for the path and message = "emergency message" for the body parameter, and transmits a POST request. In this case, the Web-service program determines that the Web client program has transmitted a request ([2]) to display a message of "emergency message." Further, as shown in FIG. 5, location header of the response message ([3]) is described with a uniform resource identifier (URI) of a newly generated message. With this configuration, the calling side (i.e., Web client program on the user PC) can recognize an identification (ID) value of newly registered data by referring the header of the response message.

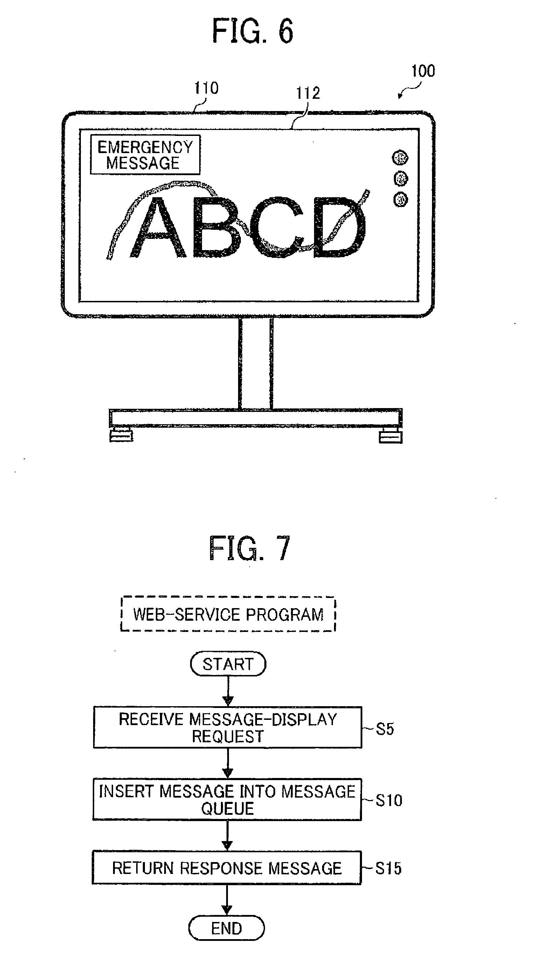

FIG. 6 illustrates a message display when the request shown in FIG. 5 is received. The Web-service processing unit 270 informs the application image generation unit 212 that the Web client program has transmitted a request to display a message of "emergency message." Then, the application image generation unit 212 displays a string of characters of "emergency message" on a screen of the image processing apparatus 110 as a volatile message. The volatile message is a message having following features. The application image generation unit 212 draws a message on the application image layer 275 and displays. The message is assumed not related to communication data used for a meeting such as handwriting information and image data. The message is cancelled from display when a given time (e.g., 10 seconds) elapses.

FIG. 7 is a flow chart showing the steps of message display when the request shown in FIG. 5 is received. A description is given of a process by the Web-service program in the Web-service processing unit 270. At first, the Web-service program receives a message-display request from a user PC at step S5. Then, at step S10, a message extracted from the message body parameter is input or inserted in a message queue 280.

Upon completing the message input or insertion to the message queue 280, the Web-service program returns a response message to the user PC, which has transmitted the request, at step S 15. In this process, as shown in FIG. 5, the Web-service program returns the response message ([3]) having a status code of "201 Created" and a message resource URI generated at the location header.

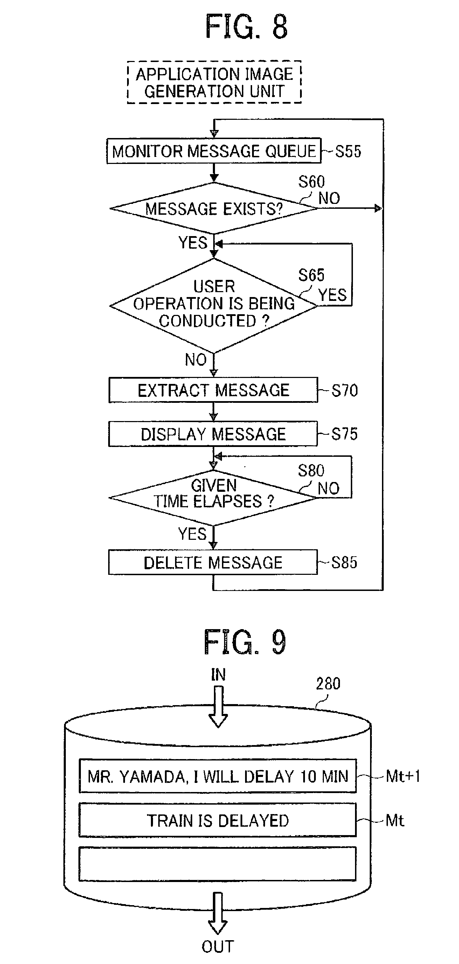

FIG. 8 is a flow chart showing the steps of operation of the application image generation unit 212. The application image generation unit 212 monitors the message queue 280 periodically at step S55. At step S60, the application image generation unit 212 confirms whether a message is in the message queue 280, and reviews a user operation thread. At step S65, the application image generation unit 212 determines whether a user is currently operating the image processing apparatus 110. In this process, it is determined that a user is currently operating the image processing apparatus 110 when the user is conducting an image drawing operation, when the user is operating a button such as pressing a button, and when time elapsed form such operation is within a given time such as three seconds. If it is determined that the user is currently operating the image processing apparatus 110, the application image generation unit 212 does not display a received message, and waits until the operation-in-progress status is cancelled. In this configuration, upon receiving a message, the application image generation unit 212 can determine an operation status of the image processing apparatus 110, in which the application image generation unit 212 can function as an operation determination unit.

As above described, if the application image generation unit 212 determines that the user is currently operating the image processing apparatus 110. the application image generation unit 212 suspends a display of message image on the display unit 112 (step S65). With this configuration, unnecessary continuous display of message image on the display unit 112 can be prevented, and users can concentrate on communication.

If the application image generation unit 212 determines that the user is not currently operating the image processing apparatus 110, the application image generation unit 212 extracts a message placed at a front of the message queue 280 from the message queue 280 at step S70. Then, at step S75, the application image generation unit 212 draws the message on the application image layer 275, in which the synthesizing unit 218 synthesizes the application image layer 275, the captured image layer 273, and the handwriting layer 274 (FIG. 4). The display control unit 220 displays the synthesized image generated by the synthesizing unit 218 to the display unit 112. The display control unit 220 can be used as a message display unit.

With this configuration, the message image can be displayed on the application image layer 275, with which the message image can be displayed on an image layer different from the captured image layer 273 and the handwriting layer 274. With this configuration, an emergency message can be quickly informed to users participating a meeting without interrupting a meeting process and operability/convenience of the image processing apparatus. With this configuration, the application image generation unit 212 can generate a string of characters of emergency message as a message image, and can display the emergency message, with which emergency information such as notice information can be informed to participants of the meeting or the like.

Then, at step S80, the application image generation unit 212 waits until a given time elapses. When the given time elapses, at step S85, the application image generation unit 21 deletes or erases the message from a screen, and monitors the message queue 280 again. The above described process is repeated until the power of the image processing apparatus 110 is turfed OFF.

In the above described process, the application image generation unit 212 (used as an image generator) assumes that a message is information different from information transmitted and shared among a plurality of apparatuses, and cancels a display of the message when a given time elapses after starting the display of the message (step S85). With this configuration, a message image of emergency message can be displayed for a given time so that users can confirm the message visually within the given time, and then the display of message image can be cancelled.

In the above described process, when a message display request is received from an external apparatus via a network, an operation status of an apparatus is determined. When it is determined that the apparatus is not currently operated, a message image is generated based on a message included in the message display request, and the message image is displayed. With this configuration, a message can be displayed when it is determined that the apparatus is not currently operated, and users can confirm the message visually. With this configuration, an emergency message can be quickly informed to users participating a meeting without interrupting a meeting process and operability/convenience of the image processing apparatus.

FIG. 9 is a schematic configuration of the message queue 280 process-able by the Web-service processing unit 270. A description is given of a configuration of the message queue 280. The message queue 280 employs a list configuration for data based on first-in first-out (FIFO). In an example embodiment, the Web-service processing unit 270 conducts an input or insertion process and an extraction process for to-be-displayed volatile message. As shown in FIG. 9, volatile messages can be input or inserted, and extracted sequentially such as in the order of "train is delayed" (message sequence: Mt) and "Mr. Yamada, I will delay 10 min" (message sequence: Mt +1) for the message queue 280. In this configuration, received messages can be input or inserted, and extracted for the message queue 280, and the Web-service processing unit 270 can conduct an input or insertion process and an extraction process for messages.

In the above described example embodiment, when a message display request is received from an external apparatus via a network, an operation status of an image processing apparatus is determined. If it is determined that the image processing apparatus is not being operated, a message image is generated based on a message included in the message display request, and then the message image is displayed, with which users can visually confirm the message displayed when the image processing apparatus is not being operated. In the above described example embodiment, emergency information can be transmitted to meeting participants without interrupting communication in a meeting, and further, emergency information can be transmitted to the meeting participants without interrupting a meeting process and operation and convenience of the image processing apparatus, with which users can concentrate on communication while paying a suitable attention to a message transmitted from an external apparatus.

The above described example embodiment can be applied as an image processing apparatus and an image processing method.

The program can be distributed by storing the program in a storage medium or carrier medium such as CD-ROM. Further, the program can be distributed by transmitting signals from a given transmission device via a transmission medium such as communication line or network (e.g., public phone line, specific line) and receiving the signals. When transmitting signals, a part of data of the program is transmitted in the transmission medium, which means, entire data of the program is not required to be on in the transmission medium. The signal for transmitting the program is a given carrier wave of data signal including the program. Further, the program can be distributed from a given transmission device by transmitting data of program continually or intermittently.

The present invention can be implemented in any convenient form, for example using dedicated hardware, or a mixture of dedicated hardware and software. The present invention may be implemented as computer software implemented by one or more networked processing apparatuses. The network can comprise any conventional terrestrial or wireless communications network, such as the Internet. The processing apparatuses can compromise any suitably programmed apparatuses such as a general purpose computer, personal digital assistant, mobile telephone (such as a Wireless Application Protocol (WAP) or 3G-compliant phone) and so on. Since the present invention can be implemented as software, each and every aspect of the present invention thus encompasses computer software implementable on a programmable device.

The computer software can be provided to the programmable device using any storage medium, carrier medium, carrier means, or digital data carrier for storing processor readable code such as a flexible disk, a compact disk read only memory (CD-ROM), a digital versatile disk read only memory (DVD-ROM), DVD recording only/rewritable (DVD-R/RW), electrically erasable and programmable read only memory (EEPROM), erasable programmable read only memory (EPROM), a memory card or stick such as USB memory, a memory chip, a mini disk (MD), a magneto optical disc (MO), magnetic Tape, a hard disk in a server, a solid state memory device or the like, but not limited these.

The hardware platform includes any desired kind of hardware resources including, for example, a central processing unit (CPU), a random access memory (RAM), and a hard disk drive (HDD). The CPU may be implemented by any desired kind of any desired number of processor. The RAM may be implemented by any desired kind of volatile or non-volatile memory. The HDD may be implemented by any desired kind of non-volatile memory capable of storing a large amount of data. The hardware resources may additionally include an input device, an output device, or a network device, depending on the type of the apparatus. Alternatively, the HDD may be provided outside of the apparatus as long as the HDD is accessible. In this example, the CPU, such as a cache memory of the CPU, and the RAM may function as a physical memory or a primary memory of the apparatus, while the HDD may function as a secondary memory of the apparatus.

In the above-described example embodiment, a computer can be used with a computer-readable program, described by object-oriented programming languages such as C++, Java (registered trademark), JavaScript (registered trademark), Perl, Ruby, or legacy programming languages such as machine language, assembler language to control functional units used for the apparatus or system. For example, a particular computer (e.g., personal computer, work station) may control an information processing apparatus or an image processing apparatus such as image forming apparatus using a computer-readable program, which can execute the above-described processes or steps. In the above described embodiments, at least one or more of the units of apparatus can be implemented in hardware or as a combination of hardware/software combination. In example embodiment, processing units, computing units, or controllers can be configured with using various types of processors, circuits, or the like such as a programmed processor, a circuit, an application specific integrated circuit (ASIC), used singly or in combination.

## Claims

1. An image processing apparatus (110, 1010) for displaying an image on a display unit (112), comprising:
a message receiving unit (270) to receive a message display request from an external apparatus via a network;
an operation determination unit (212) to determine whether the image processing apparatus (110, 1010) is being operated when the message receiving unit (270) receives the message display request; and
a message display unit (220) to display a message image on the display unit (112);
**characterized by**
an image generator (212) to generate the message image based on a message included in the message display request when the operation determination unit (212) determines that the image processing apparatus (110, 1010) is not being operated.

2. The image processing apparatus (110, 1010) of claim 1, wherein when the operation determination unit (212) determines that the image processing apparatus (110,1010) is being in an operation condition, the image generator (212) suspends displaying of the message image on the display unit (112).

3. The image processing apparatus of claim 1, wherein the image generator (212) generates a string of characters indicating an emergency message as the message image.

4. The image processing apparatus of claim 1, wherein the message display unit (220) displays the message image on an application image layer (218).

5. The image processing apparatus of claim 1, further comprising a Web-service processing unit (270) that inputs or extracts the message received by the message receiving unit (270) to a message queue (280).

6. The image processing apparatus of claim 1, wherein the image generator (212) assumes that the message is information different from transmission information transmitted and shared among a plurality of apparatuses, and cancels a display of the message when a given time elapses after starting the display of the message.

7. An image processing system (100, 1000) comprising:
an external apparatus (130a, 130b, 130c, 130d) connectable to the image processing apparatus (110, 1010) of claim 1; and
the image processing apparatus (110, 1010) of claim 1 for displaying an image on the display unit (112) when a message display request is received from the external apparatus (130a, 130b, 130c, 130d).

8. A method of displaying an image on a display unit (112), the method comprising the steps of:
receiving a message display request from an external apparatus via a network;
determining whether an image processing apparatus (110, 1010) is being operated in response to receiving the message display request; and
displaying a message image on the display unit (112);
**characterized by**
generating the message image based on a message included in the message display request when the operation determination step determines that the image processing apparatus (110, 1010) is not being operated.

9. A computer-readable carrier medium storing a program that, when executed by a computer having a processing circuit, causes the computer to execute the image processing method for displaying an image on a display unit (112) of claim 8.

## Patentansprüche

1. Bildverarbeitungsvorrichtung (110, 1010) zum Anzeigen eines Bildes auf einer Anzeigeeinheit (112), die umfasst:
eine Nachrichtenempfangseinheit (270), um eine Nachrichtenanzeigeanforderung von einer externen Vorrichtung über ein Netz zu empfangen;
eine Betriebsbestimmungseinheit (212), um zu bestimmen, ob die Bildverarbeitungsvorrichtung (110, 1010) betrieben wird, wenn die Nachrichtenempfangseinheit (270) die Nachrichtenanzeigeanforderung empfängt; und
eine Nachrichtenanzeigeeinheit (220), um ein Nachrichtenbild auf der Anzeigeeinheit (112) anzuzeigen;
**gekennzeichnet durch**
einen Bildgenerator (212), um das Nachrichtenbild anhand einer in der Nachrichtenanzeigeanforderung enthaltenen Nachricht zu erzeugen, wenn die Betriebsbestimmungseinheit (212) bestimmt, dass die Bildverarbeitungsvorrichtung (110, 1010) nicht betrieben wird.

2. Bildverarbeitungsvorrichtung (110, 1010) nach Anspruch 1, wobei dann, wenn die Betriebsbestimmungseinheit (212) bestimmt, dass die Bildverarbeitungsvorrichtung (110, 1010) in einem Betriebszustand ist, der Bildgenerator (212) das Anzeigen des Nachrichtenbildes auf der Anzeigeeinheit (112) aussetzt.

3. Bildverarbeitungsvorrichtung nach Anspruch 1, wobei der Bildgenerator (212) eine Zeichenkette erzeugt, die eine Notfallnachricht als das Nachrichtenbild angibt.

4. Bildverarbeitungsvorrichtung nach Anspruch 1, wobei die Nachrichtenanzeigeeinheit (220) das Nachrichtenbild auf einer Anwendungsbildschicht (218) anzeigt.

5. Bildverarbeitungsvorrichtung nach Anspruch 1, die ferner eine Webdienstverarbeitungseinheit (270) umfasst, die die durch die Nachrichtenempfangseinheit (270) empfangene Nachricht in eine Nachrichtenreihe (280) eingibt oder extrahiert.

6. Bildverarbeitungsvorrichtung nach Anspruch 1, wobei der Bildgenerator (212) annimmt, dass die Nachricht Informationen sind, die von unter mehreren Vorrichtungen gesendeten und gemeinsam genutzten Übertragungsinformationen verschieden sind, und eine Anzeige der Nachricht abbricht, wenn eine gegebene Zeit nach dem Starten der Anzeige der Nachricht abgelaufen ist.

7. Bildverarbeitungssystem (100, 1000), das umfasst:
eine externe Vorrichtung (130a, 130b, 130c, 130d), die mit der Bildverarbeitungsvorrichtung (110, 1010) nach Anspruch 1 verbunden werden kann; und
die Bildverarbeitungsvorrichtung (110, 1010) nach Anspruch 1 zum Anzeigen eines Bildes auf der Anzeigeeinheit (112), wenn eine Nachrichtenanzeigeanforderung von der externen Vorrichtung (130a, 130b, 130c, 130d) empfangen wird.

8. Verfahren zum Anzeigen eines Bildes auf einer Anzeigeeinheit (112), wobei das Verfahren die folgenden Schritte umfasst:
Empfangen einer Nachrichtenanzeigeanforderung von einer externen Vorrichtung über ein Netz;
Bestimmen, ob eine Bildverarbeitungsvorrichtung (100, 1010) betrieben wird, als Reaktion auf das Empfangen der Nachrichtenanzeigeanforderung; und
Anzeigen eines Nachrichtenbildes auf der Anzeigeeinheit (112);
**gekennzeichnet durch**
Erzeugen des Nachrichtenbildes aufgrund einer in der Nachrichtenanzeigeanforderung enthaltenen Nachricht, wenn der Betriebsbestimmungsschritt bestimmt, dass die Bildverarbeitungsvorrichtung (110, 1010) nicht betrieben wird.

9. Computerlesbares Trägermedium, das ein Programm speichert, das dann, wenn es durch einen Computer mit einer Verarbeitungsschaltung ausgeführt wird, bewirkt, dass der Computer das Bildverarbeitungsverfahren zum Anzeigen eines Bildes auf einer Anzeigeeinheit (112) nach Anspruch 8 ausführt.

## Revendications

1. Appareil de traitement d'image (110, 1010) pour afficher une image sur une unité d'affichage (112), comportant :
une unité de réception de message (270) pour recevoir une requête d'affichage de message depuis un appareil externe par l'intermédiaire d'un réseau ;
une unité de détermination d'opération (212) pour déterminer si l'appareil de traitement d'image (110, 1010) est actionné lorsque l'unité de réception de message (270) reçoit la requête d'affichage de message ; et
une unité d'affichage de message (220) pour afficher une image de message sur l'unité d'affichage (112);
**caractérisé par**
un générateur d'image (212) pour générer l'image de message en fonction d'un message inclus dans la requête d'affichage de message lorsque l'unité de détermination d'opération (212) détermine que l'appareil de traitement d'image (110, 1010) n'est pas actionné.

2. Appareil de traitement d'image (110, 1010) selon la revendication 1, dans lequel, lorsque l'unité de détermination d'opération (212) détermine que l'appareil de traitement d'image (110, 1010) se trouve dans une condition d'opération, le générateur d'image (212) suspend l'affichage de l'image de message sur l'unité d'affichage (112).

3. Appareil de traitement d'image selon la revendication 1, dans lequel le générateur d'image (212) génère une chaîne de caractères indiquant un message d'urgence en tant qu'image de message.

4. Appareil de traitement d'image selon la revendication 1, dans lequel l'unité d'affichage de message (220) affiche une image de message sur une couche d'image d'application (218).

5. Appareil de traitement d'image selon la revendication 1, comportant en outre une unité de traitement de service Web (270) qui entre ou extrait le message reçu par l'unité de réception de message (270) dans une fil d'attente de message (280).

6. Appareil de traitement d'image selon la revendication 1, dans lequel le générateur d'image (212) suppose que le message est une information différente d'une information de transmission transmise et partagée par une pluralité d'appareils, et annule un affichage du message lorsqu'un temps donné est écoulé après le démarrage de l'affichage du message.

7. Système de traitement d'image (100, 1000) comportant :
un appareil externe (130a, 130b, 130c, 130d) pouvant être relié à l'appareil de traitement d'image (110, 1010) selon la revendication 1 ; et
l'appareil de traitement d'image (110, 1010) selon la revendication 1 prévu pour afficher une image sur l'unité d'affichage (112) lorsqu'une requête d'affichage de message est reçue depuis l'appareil extérieur (130a, 130b, 130c, 130d).

8. Procédé d'affichage d'une image sur une unité d'affichage (112), le procédé comportant les étapes consistant à :
recevoir une requête d'affichage de message depuis un appareil extérieur par l'intermédiaire d'un réseau;
déterminer si un appareil de traitement d'image (110, 1010) est actionné ou non en réponse à la réception de la requête d'affichage de message ; et
afficher une image de message sur l'unité d'affichage (112) ;
**caractérisé par**
la génération de l'image de message en fonction d'un message compris dans la requête d'affichage de message lorsque l'étape de détermination d'opération détermine que l'appareil de traitement d'image (110, 1010) n'est pas actionné.

9. Support pouvant être lu par un ordinateur comportant un programme qui, lorsqu'il est exécuté par un ordinateur possédant un circuit de traitement, amène l'ordinateur à exécuter le procédé de traitement d'image pour afficher une image sur une unité d'affichage (112) selon la revendication 8.
